# EUROPEAN PATENT SPECIFICATION

(11) **EP 0 546 632 B1**
(45) Date of publication and mention of the grant of the patent: **09.07.1997**
(21) Application number: 92203811.2
(22) Date of filing: 08.12.1992
(51) Int. Cl.: A22C 15/00

(54) **Method for manufacturing a hanger for sausages**
Verfahren zur Herstellung eines Aufhängers für Würste
Procédure de fabrication d'un dispositif de suspension pour saucisses

(30) Priority: 12.12.1991 NL 9102076
(43) Date of publication of application: 16.06.1993
(73) Proprietor: Alewijnse, Cornelis, 5384 BB Heesch (NL)
(72) Inventor: Alewijnse, Cornelis, NL-5384 BB Heesch (NL); van den Heuvel, Hendricus Petrus Johannes, NL-5397 LR Lith (NL)
(74) Representative: Jilderda, Anne Ayolt

(56) References cited:
- EP-A- 0 189 763
- EP-A- 0 427 542
- EP-A- 0 428 355
- DE-A- 3 437 830
- DE-C- 364 781
- DE-C- 474 827
- DE-C- 816 963
- DE-U- 8 900 035
- US-A- 1 691 134
- US-A- 1 922 263
- US-A- 2 264 077
- US-A- 3 831 769

## Description

The invention relates to a method for manufacturing a rod for hanging objects thereon in a stable way, such that as large as possible a part of the surface of an object is free of the surface of the rod; the rod being hollow and having a cross section of the shape of a polygon, of which at least the standing sides are indented inwardly.

Such rods are especially used when smoking sausages. The sausage consists of a tubular-shaped "skin" with contents. The tubular-shaped skin is closed at each of its ends by means of a clip, with which the skin is pinched together at those places. The ends are then, for example, connected with one another and brought towards one another with the aid of a string. Straight sausages can also be involved, for which a loop is attached to the clip on one end of the sausage. A sausage is then hung on that string or on that loop on a rod, by passing it over the rod or threading it onto the rod. Thus a row of sausages can be hung on one rod and the rod can be placed or can be hung in a space in which the sausages are smoked.

This way of hanging objects on a rod is generally used in places where objects must be in contact with the surrounding atmosphere with a very large part of, or with their entire, surface area. This is, for example, the case when smoking sausages; where the surface of the sausage is not freely accessible for smoke it will show a different colour. This is not, however, only important when smoking sausages, but also in general when climatising.

Because the said rods, whether or not with objects hung thereon, must be transported many times, it is important to make the rods lightweight. And in order to ensure that as small a part as possible of the surface of the objects lies against the rod, these are generally implemented in such a manner, that a perpendicular cross-section of a rod has the form of a polygon. The object, such as the sausage, is then always situated at the ribs of the rod, lying against the rod. And in order to be released entirely from other contacts than that, at the location of the ribs, use is preferably made of a rod of which the perpendicular cross-section is a polygon - preferably a triangle - with at least the sides along which the object hangs indented.

This kind of rod is for instance known from the German Patent no. DE-C-474 827. Although no indication is given as to the material from which the rods are made, it is customary to manufacture them from aluminum.

Aluminum rods of the type described herein before have several disadvantages. An important disadvantage is, that traces of aluminum end-up on the objects, for example food, which must be avoided for health purposes. Another large disadvantage is that such aluminum rods are difficult to clean: they are easily corroded by cleaning agents, from which results a coarse structure, which makes cleaning difficult, reduces the strength because the aluminum becomes brittle, and sharpens the ribs on which the objects hang, as a result of which damage occurs when they are threaded on.

The best alternative is a rod, made of stainless steel, as for instance described in the US Patent no. US-A-3831769. In order to avoid the disadvantages resulting from the high weight of steel, such rods are hollow.

Preferred, for instance for hanging sausages to be smoked, are rods of the above type - stainless steel, hollow and with polygonic cross section - of which the polygon is a triangle, of which at least both sides along which in use hangs the object (the sausage) are indented inwardly.

The bottom side of the rod may be flat, but in order not to be bound by one position of the rod, which is beneficial for the ease of use, all (three) sides of the triangle are preferably indented inwardly.

Such a rod preferably is closed on its front and rear end, as a result of which contamination of the inside of the rod is avoided. The closing at both ends preferably is realised by welding.

In order to ensure that the objects hanging on a rod are distributed when hanging thereon equally across its length, according to a preferred design at least the upper rib of the rod is equipped with a profile, for example with cross-indentations or cross-gulleys situated behind one another in a longitudinal direction and at equal distances from one another. In this manner one can achieve an optimal "occupation" of a rod, without the objects touching each other. The same as with the indentations of the sides, preferably also such a profile is applied on each rib, so that no attention has to be paid as to whether a rod is hung with the correct - the profiled - rib upwards.

The invention now offers an economical method for making a rod as described above. That method is characterized in that, starting from a tube of stainless steel, the outer surface of the tube is indented across its entire length by a number of cylinder shaped rollers, the number being equal to the number of sides of the polygon to be indented, which rollers rotate around axes perpendicular with the axis of the tube to cooperate with the tube surface.

The invention will be explained further with the aid of the drawings, in which:
- Fig.1: gives a cross-section of a stainless steel tube, from which a rod according to the invention is made;
- Fig.2: schematically shows how a rod according to the method of the invention is made from the tube;
- Fig.3: shows a rod made by the method according to the invention and
- Fig.4: shows a perpendicular cross-section through such a rod with a sausage hanging on it in two possible positions.

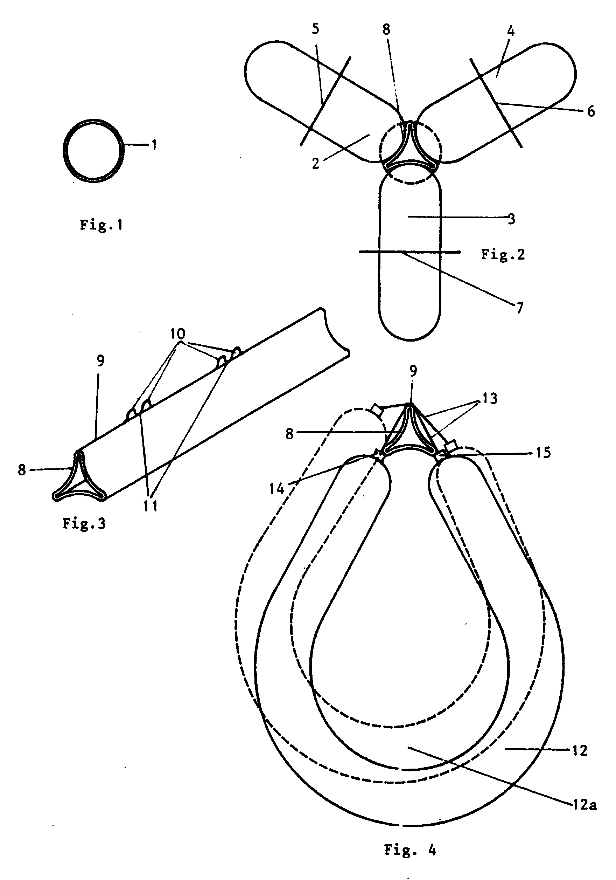

In Fig.1, 1 is a stainless steel tube, from which according to the method of the invention a rod is to be manufactured by - see Fig.2 - indenting that tube from the three side. This indenting is realised by the rollers 2, 3 and 4, which rotate around their axes, 5, 6 and 7 respectively, which axes are perpendicular to the axis of the tube. The result is a tube, the perpendicular cross-section of which has the shape which is shown with 8 in Fig.2: a triangle with sides which are indented inwardly.

Fig.3 shows the rod again in perspective with the cross-section 8. On the top rib 9, 10 roughly shows a profile: in the case which is drawn the profile consists of raised parts 10 attached to that rib 9 - for example welded thereon, with in between them gulleys 11 which run at right-angles to the longitudinal axis of the rod. In those gulleys 11 the string can then rest with which an object hangs over the rod.

Fig.4 shows how an object - in the case which is drawn: a sausage 12 and 12a respectively, hangs on/over the rod. A string 13 has been wound over the top rib 9 of a rod with a perpendicular cross-section 8. On that rib 9 the string 13 will be held in place as a result of the fact that it lies in a gulley 11 - not drawn in Fig.4. In Fig.4, 12 is a sausage which hangs with its clips 14 and 15 against ribs of the rod. The surface of a sausage which is hung in this manner does not touch the surface of the rod anywhere and the total surface is therefore accessible for, for example, smoke.

If a sausage hangs over the rod a little "unevenly" - see the position of sausage 12a - its surface will lie against the rod. In order to make the area of contact in that case also as small as possible the hollow/indented situation of the rod walls work well: also in the case of a flexible surface of the object, such as the skin of a sausage, there will only be a small area of contact.

## Claims

1. Method for manufacturing a rod (8) or hanging thereon objects (12) in a stable way, such that as large as possible a part of the surface of an object (12) does not make any contact with the rod (8), the rod (8) being hollow and having a cross section of the shape of a polygon, of which at least the standing sides are indented inwardly, characterized in that the outer surface of a stainless steel tube is indented across its entire length by a number of cylinder shaped rollers (2, 3, 4), the number being equal to the number of sides of the polygon to be indented, which rollers (2, 3, 4) rotate around axes (5, 6, 7) perpendicular to the axis of the tube (18) to cooperate with the tube surface.

2. Method according to claim 1, for manufacturing a rod (8), having a cross section of the shape of a triangle, all three sides of it being indented, characterized in that the number of rollers (2, 3, 4) is three, with rotating axes, each enclosing angles of 60° with the axes of the other rollers.

## Patentansprüche

1. Verfahren zur Herstellung eines Stabes (8) um daran Objekte (12) auf eine stabile Weise aufzuhängen, so daß ein größtmöglicher Teil der Oberfläche eines Objektes (12) keinerlei Berührung mit der Stange (8) macht, die Stange (8) hohl ist und einen Querschnitt in der Form eines Polygons hat, wovon zumindest die stehenden Seiten nach innen eingekerbt sind, dadurch gekennzeichnet, daß die Außenfläche eines Rohres aus rostfreiem Stahl über ihre gesamte Länge durch eine Anzahl zylinderförmiger Rollen (2, 3, 4) eingekerbt ist, die Anzahl gleich der Anzahl Seiten des einzukerbenden Polygons ist, welche Rollen (2, 3, 4) um die Achsen (5, 6, 7) senkrecht zur Achse des Rohres (18) drehen, um mit der Rohroberfläche zusammenzuarbeiten.

2. Verfahren nach Anspruch 1 zur Herstellung eines Stabes (8), der einen Querschnitt in der Form eines Dreiecks hat, wovon alle drei Seiten eingekerbt sind, dadurch gekennzeichnet, daß die Anzahl Rollen (2, 3, 4) drei ist, mit drehenden Achsen, die jeweils Winkel von 60° mit den Achsen der anderen Rollen einschließen.

## Revendications

1. Procédé de fabrication d'une tige (8) permettant de suspendre des objets de façon stable, de sorte qu'une partie importante de la surface d'un objet n'ait aucun contact avec la tige (8), celle-ci (8) étant creuse et munie d'un profil transversal en forme de polygone dont au moins les côtés verticaux sont crénelés vers l'intérieur, caractérisé dans le fait que la surface extérieure d'un tube en acier inoxydable est crénelé sur toute sa longueur par un certain nombre de roulettes de forme cylindrique (2, 3, 4), ce nombre étant égal au nombre de côtés du polygone d'être crénelés, lesquelles roulettes (2, 3, 4) pivotent autour d'axes (5, 6, 7) perpendiculaires à celui du tube (18) afin de coopérer avec la surface du tube.

2. Méthode conforme à la revendication 1 de procédé de fabrication d'une tige (8) ayant un profil transversal triangulaire dont les trois côtés sont crénelés, caractérisé dans le fait qu'il comporte 3 roulettes (2, 3, 4), aux axes pivotants, chacun formant des angles de 60° avec les axes des autres roulettes.
